# EUROPEAN PATENT APPLICATION

(11) **EP 4 336 386 A1**
(43) Date of publication of application: **13.03.2024**
(21) Application number: 23196811.6
(22) Date of filing: 12.09.2023
(51) Int. Cl.: G06F 18/2131, G06V 20/40

(54) **A SYSTEM AND METHOD FOR IDENTIFYING A CUTSCENE**

(30) Priority: 12.09.2022 GB 202213272
(71) Applicant: Sony Interactive Entertainment Europe Limited, London W1F 7LP (GB)
(72) Inventor: BRISLIN, Simon Andrew St. John, London, W1F 7LP (GB); RYAN, Nicholas Anthony Edward, London, W1F 7LP (GB)
(74) Representative: Gill Jennings & Every LLP

(57) **Abstract**

A method for identifying a cutscene in gameplay footage, the method comprising: receiving a first video signal and a second video signal each comprising a plurality of images; creating a first video fingerprint comprising a plurality of signatures, each signature of the plurality of signatures based on at least one image of the plurality of images in the first video signal; creating a second video fingerprint comprising a plurality of signatures, each signature of the plurality of signatures based on at least one image of the plurality of images in the second video signal; comparing the first video fingerprint with the second video fingerprint; and identifying a cutscene when at least a portion of the first video fingerprint has at least a threshold level of similarity with at least a portion of the second video fingerprint.

## Description

### FIELD OF THE INVENTION

The present invention relates to a method for identifying a cutscene in gameplay footage created by a gaming system.

### BACKGROUND

From arcade gaming systems to the handheld consoles used today, the video gaming industry has remained at the forefront of computer technology since its advent. To go hand-in-hand with the evolving technological advancements, developers have aimed to create games with greater complexity, more gripping maps and more compelling storylines.

As the storage space for video games has increased over the years, developers have increasingly used cutscenes in games to bring the story of the game to life, to provide a transition between game sections, and to engage a user whilst the system is performing a task that may otherwise introduce a delay in the progress of a game. A cutscene is a sequence in a video game that is non-interactive and interrupts the gameplay. Developers use cutscenes to submerge the player in the game's story and create emotional connections between the player and the world within the video game. These scenes may be used to show a transition between levels or conversations between characters, they may alternatively be used to set the mood or reward the player.

Not only has the increase in available storage space allowed developers to include cutscenes in video games, but it has also provided players with the ability to record and save their gameplay. Players can store and watch back their recorded gameplay, and with social networking capabilities growing, players can share and stream their recorded gameplay with others. This enables players to learn new tactics and tricks from watching how others tackle tasks in a game.

However, video games can often take hours or even days to complete, which results in a lot of footage when recording. If a player wishes to locate a given section of a game from an uploaded video, it can be a cumbersome process to manually search through the footage. Players will encounter the same problem when trying to locate a specific game or section of a game from a library of videos.

The player may be able to recognise specific scenes and levels in the game when manually watching the footage, giving an indication of which section of the game is currently playing. A player is able to speed up the process of locating a desired section of a game by recognising cutscenes they know to take place at a particular point in the game. However, this requires a lot of time and effort to carry out.

Current automated video recognition software can take a first video clip and recognise duplicates of the clip in a second video clip. However, scenes in video games vary for each gameplay due to factors such as player preferences and system settings. Even cutscenes are not identical due to these factors. As such, this current software will fail when trying to identify scenes or sections of a video game.

There is therefore a need to address at least some of the above problems.

### SUMMARY OF INVENTION

According to a first aspect there is provided a method for identifying a cutscene in gameplay footage, the method comprising: receiving a first video signal and a second video signal each comprising a plurality of images; creating a first video fingerprint comprising a plurality of signatures, each signature of the plurality of signatures based on at least one image of the plurality of images in the first video signal; creating a second video fingerprint comprising a plurality of signatures, each signature of the plurality of signatures based on at least one image of the plurality of images in the second video signal; comparing the first video fingerprint with the second video fingerprint; and identifying a cutscene when at least a portion of the first video fingerprint has at least a threshold level of similarity with at least a portion of the second video fingerprint.

As previously mentioned, the term "cutscene" refers to a sequence in a video game that is non-interactive and interrupts the gameplay. Cutscenes are a way of bookmarking and identifying parts of gameplay footage since they appear at substantially the same point in the storyline of the game for every player. The term "signature" refers to a unique summarisation made based on the at least one image and is, therefore, a unique identifier of the at least one image.

Since the video fingerprints each comprise a plurality of signatures, the memory required to store the video fingerprints is less than that required to store the original video signals. In this way, the first video fingerprint can be compared with the second video fingerprint much faster than if the two video signals were compared without converting them to video fingerprints. Using a threshold level of similarity to identify a cutscene allows a cutscene to still be identified even when there are some variations between the cutscene in each of the video signals.

Each signature of the plurality of signatures may comprise a plurality of characters, each character of the plurality of characters representing a similar feature within the at least one image of the plurality of images. The term "character" refers to any suitable descriptor used to represent a feature in the at least one image. For example, if the same feature is in more than one image, each will have the same character representing that feature in their signature. For example, each character may be a colour or a bit string representing the said colour found in the at least one image. The plurality of characters therefore may form a colour palette. Images comprising the exact same colours will have the same colour palette as their signature. Each character may alternatively be a bit string representing numbers or letters.

Since cutscenes in a game are typically customised to the player based on, for example, system preferences and character traits including clothing or hair colour, different lighting or environmental changes, explosions or particles, each cutscene will vary slightly. As such, by allowing similar features to be extracted and summarised, the process becomes robust to small variations in the cutscenes recorded during two different gameplays, such that a cutscene will be recognised regardless of these small differences.

Each signature of the plurality of signatures may be the same size. This improves the ability of the system to compare the first video fingerprint with the second video fingerprint since as each at least one image is represented by the same sized information.

The steps of creating the video fingerprints may comprise using locality-sensitive hashing to generate each signature of the plurality of signatures, each signature of the plurality of signatures being a hash code. Locality-sensitive hashing is an algorithmic technique that extracts similar features from at least one image. Such outputs of these algorithms (i.e. the hash codes) are designed to vary very little when the at least one images undergoes minor modifications such as a change in brightness, size or colour correction. A 'hash code' is a bit string of values which characterise features in the at least one image. Using a hash code to identify an image is computationally and storage effective, thereby using less of the memory when stored and speeding up the comparison between images. Preferably the bit string represents numbers or letters which require minimal memory to stored, thereby conserving computer memory further.

Alternatively, palette hashing may be used to generate each of the plurality of signatures wherein the plurality of signatures are the dominant colours in the at least one of the plurality of images. In other words, each signature is a simplified palette of the main colours in the at least one image. Preferably, the dominant colours will be ordered from most dominant to least dominant for each signature. Again, this reduces the memory required to store the video fingerprint and speeds up the comparison.

The locality-sensitive hashing may be one of perceptual hashing or wavelet hashing. A perceptual hashing is a type of locality-sensitive hashing which returns similar values if the features of an image are similar. Advantageously, perceptual hashing uses a discrete cosine transform to convert the at least one image into the frequency domain which is typically more stable to image transformations such as brightness, image size or colour scheme and to markings such as watermarks or added text. Wavelet hashing also converts the at least one image into the frequency domain, however, wavelet hashing uses a discrete wavelet transformation. Using one of these algorithms not only means the resulting fingerprints will be compact and robust to small changes, but will also result in large differences when the compared fingerprints are dissimilar and small difference when compared fingerprints are similar.

The plurality of signatures of each fingerprint may be arranged consecutively. This means that each of the fingerprints represents the plurality of images in the order they were received. The scenes in the original signal will have an equivalent representation in the fingerprints.

The step of comparing the first video fingerprint with the second video fingerprint may comprise comparing at least a portion of the first video fingerprint with a plurality of portions of the second video fingerprint, the portions each comprising the same number of signatures.

The step of comparing the first video fingerprint with the second video fingerprint may comprise comparing a plurality of portions of the first video fingerprint with a plurality of portions of the second video fingerprint, the portions each comprising the same number of signatures.

Comparing portions of the video fingerprints as described above allows for improved precision when identifying a cutscene, particularly when the or each fingerprint comprises a number of undesired scenes.

In some examples, at least one discrete result may be determined for each of the compared portions. A discrete result may comprise a discrete value, for example, the discrete value may be one of a "true" or "false" value. When more than one discrete value is determined for the compared portions, a quantity of each discrete value may be calculated and used to determine a quantitative error on the compared portions.

In other examples, the method may further comprise calculating a mean squared error value for each of the compared portions. In this way, the compared portions have a quantitative measure of the error between them such that it becomes easier to identify portions that are similar and those which are not.

The method may further comprise comparing the mean squared error value for each of the compared portions with an error margin and identifying the compared portions as matched portions when the mean squared error value is one of greater than or less than the error margin. Matched portions of code will have a mean squared error value very different from the unmatched portions. In this way, the mean squared error on the matched portions will be outliers to the rest of the mean squared error values and therefore are likely to lie outside of the error margin. This makes the matched portions easy to identify, therefore making the portions likely to contain the cutscene easily identifiable.

The identified matched portions of the first video fingerprint or the second video fingerprint may be merged into a single clip. A merged single clip reduces the storage space required to storage matched portions as overlapping parts may be removed during merging.

The method may further comprise identifying a start of the cutscene and an end of the cutscene within the single clip. This improves the identification of a cutscene in the clip.

The single clip may be pruned based on the identified start of the cutscene and the identified end of the cutscene. This means the single clip is therefore more likely to be a clip of just the cutscene and will likely not comprise surrounding scenes.

According to a second aspect there is provided a system configured to perform the method of any preceding claim, the system comprising: a receiving unit configured to receive a first video signal and a second video signal each comprising a plurality of images; a creation unit configured to create a first video fingerprint comprising a plurality of signatures, each signature of the plurality of signatures based on one image of the plurality of images in the first video signal, the creation unit further configured to create a second video fingerprint comprising a plurality of signatures, each signature of the plurality of signatures based on one image of the plurality of images in the second video signal; a comparison unit configured to compare the first video fingerprint with the second video fingerprint; and an identification unit configured to identify a cutscene when at least a portion of the first video fingerprint has at least a threshold level of similarity with at least a portion of the second video fingerprint.

### BRIEF DESCRIPTION OF DRAWINGS

Figure 1 is a schematic diagram of a system in which a method according to the present invention is implemented;
Figure 2 is a flow chart schematically illustrating steps of a method according to the present invention;
Figure 3a schematically illustrating steps of a method according to the present invention;
Figure 3b schematically illustrating steps of a method according to the present invention;
Figure 3c schematically illustrating steps of a method according to the present invention.

### DETAILED DESCRIPTION

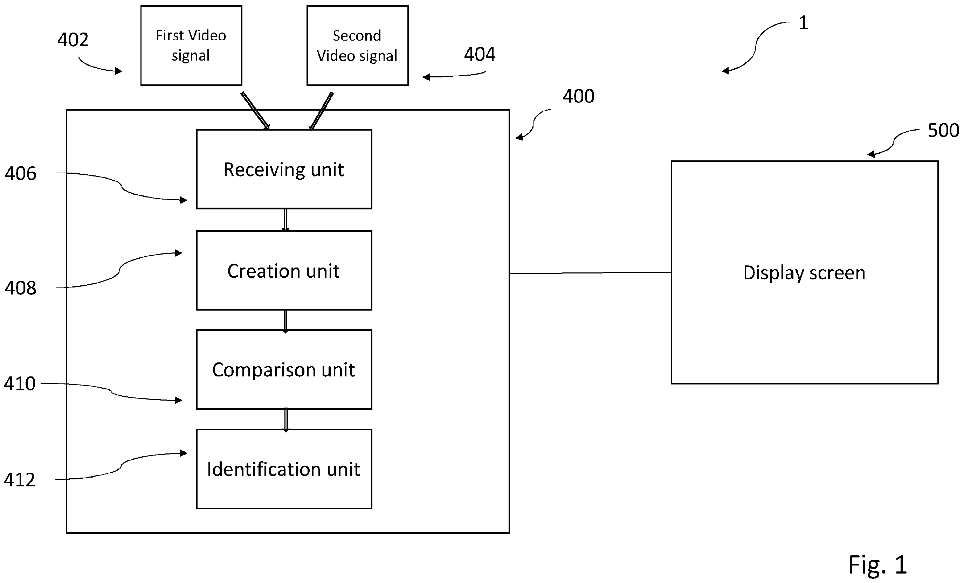

Figure 1 is a schematic diagram of a system 1 in which a method according to the present invention is implemented. The system may comprise a computer 400 coupled to a display screen 500 via a wired or wireless connection. In some implementations, the display screen 500 and the computer 400 may be combined in a single device.

The computer 400, may be a gaming system console which allows players to play games, record gameplay using appropriate applications and interface with the games and applications through a peripheral device. Alternatively, the computer 400 may be a multimedia streaming receiver, a DVD player or any other multimedia source.

The computer 400 may comprise a receiving unit 406 configured to receive the first video signal 402 and the second video signal 404 each comprising a plurality of images. The received video signals 402, 404 may originate from an external source. Alternatively, at least one video signal 402, 404, may be produced on the computer 400 itself.

In this example, the computer 400 comprises a first creation unit 408 configured to create a first video fingerprint comprising a plurality of signatures, each signature of the plurality of signatures based on at least one image of the plurality of images in the first video signal, the creation unit 408 is further configured to create a second video fingerprint comprising a plurality of signatures, each signature of the plurality of signatures based on at least one image of the plurality of images in the second video signal. In other examples, there may be a second creation unit, each creation unit being configured to create one of the fingerprints.

The computer 400 may further comprise a comparison unit 410 as shown. The comparison unit 410 is configured to compare the first video fingerprint with the second video fingerprint. The computer 400 may further comprise an identification unit 412 that is configured to identify a cutscene when at least a portion of the first video fingerprint has at least a threshold level of similarity with at least a portion of the second video fingerprint.

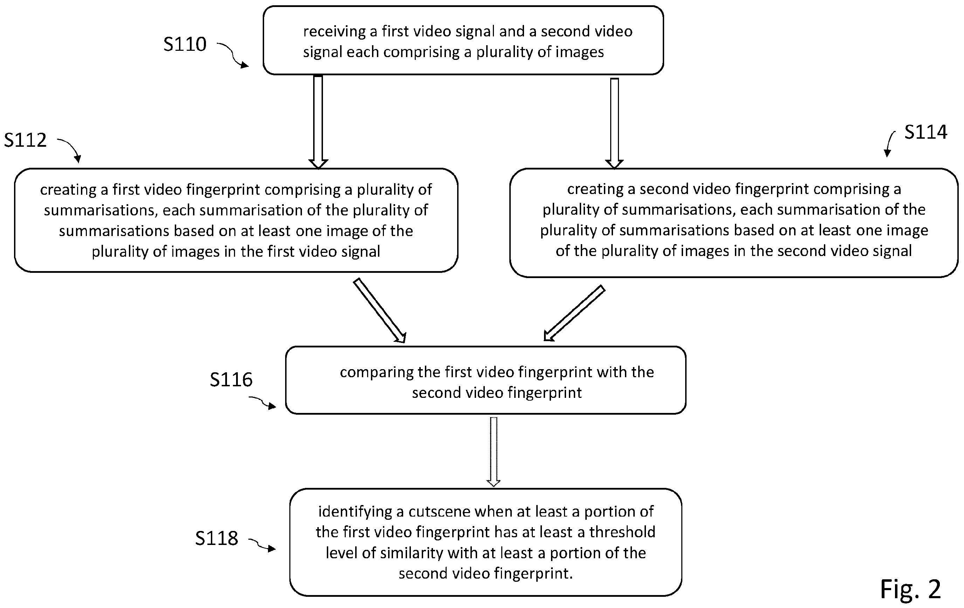

Figure 2 is a flow chart schematically illustrating the steps of a method according to the present invention. At step S110 the computer 400 receives a first video signal and a second video signal, each comprising a plurality of images. The first video signal and second video signal, may collectively be referred to as "the video signals" throughout the description for ease, however, it will be apparent that these are the signals being referred to.

The plurality of images in each of the video signals may form one or more scene from a video game, recorded when the game was played by a player. The terms "player" may refer to a person playing the game recorded in the video signals, in some examples the player may also be a user of the described invention.

At least one of the one or more scenes in at least one of the video signal may be a cutscene. The video signals may be recordings taken of the same game during different gameplays. At least one of the video signals signal may be captured directly on the computer 400 using an appropriate application, may be downloaded from an external source such as the internet or the cloud or may be captured using a smart phone or camera. The computer 400 may require internet connection to receive at least one of the video signals or they may be accessible offline.

The video signals may have the same runtime i.e. both video signals comprising the same number of images played with the same frame rate. Alternatively, the two video signals may have a different runtime to one another, for example, the video signals may each comprise a different number of images played with the same frame rate.

The received video signals may optionally undergo preprocessing. At least one video signal may have a long runtime, for example a runtime of a few hours, such that the at least one video signal may be cropped to comprise only a select section of received video signal.

At S112, the computer 400 creates a first video fingerprint comprising a plurality of signatures, each signature of the plurality of signatures based on at least one image of the plurality of images in the first video signal. At S114, the computer 400 creates a second video fingerprint comprising a plurality of signatures, each signature of the plurality of signatures based on at least one image of the plurality of images in the second video signal. The fingerprints may be created simultaneously or they may be created one after the other. It is not required that the computer 400 creating the fingerprints be the same, it may for example be two different computers connected via a wired or wireless connection that each create the fingerprints.

Each signature of the plurality of signatures may comprise a plurality of characters, each character representing a similar feature within the at least one image of the plurality of images. For example, each character may be a colour, or a bit string representing said colour, that is dominant in the at least one image. The signature for each at least one image may therefore be a colour palette comprising the dominant colours in the at least one image. Alternatively, each character may be a symbol, or a bit string representing said symbol, including numbers and letters, with each symbol representing a feature in the at least one image. Practically, this means that, for example, when two images from the plurality of images comprise a similar feature, they will both have the same character representing that feature in their signature.

Additionally, each of the plurality of signatures may be the same size. By "the same size" this may refer to a bit string comprising the same number of bits in a sequence. This is advantageous in the next step of comparing the fingerprints since bits of the same size are easier to compare than those of a different size.

Creating the fingerprints at S112 and S114 may comprise using locality-sensitive hashing to generate each of the plurality of signatures, each of the plurality of signatures being a hash code. Locality-sensitive hashing is an algorithmic technique used to reduce the dimensionality of data by duplicating large quantities in a file and clustering the data. For images, this means the algorithm duplicates large features in the at least one image and then hashes data points into "buckets" such that similar input items are located in the same buckets with a high probability, while dissimilar items are likely to be located in different buckets. This algorithm looks to maximise hash collisions. Hash collisions are when two potentially different pieces of data share the same hash code. In other words, two images that are similar, but not identical, will have the same hash code.

More specifically, the locality-sensitive hashing may be one of a perceptual hashing or a wavelet hashing. A characterising feature of the perceptual hashing algorithm is the application of a discrete cosine transformation to the image. This transforms the image into the frequency domain. The frequency domain is advantageously more stable to image transformations such as colour correction and compressions. An example of how the perceptual hashing algorithm may work is by first calculating the grey scale values for an image and scaling it down. A discrete cosine transform may then be applied to the image per row then per column. This results in pixels with a high frequency being located in the upper left corner of the image, such that the image can be cropped to only contain these high frequency pixels. The median of the grey values in this image can then be calculated, thereby generating a hash code for the image.

A wavelet hashing algorithm may be applied in the same way, however, instead of applying a discrete cosine transform, a discrete wavelet transform may be applied. In practice, these algorithms may be implemented using appropriate programs such as Python.

Since an aim of the invention is to identify cutscenes in a game sequence video, these algorithms prove particularly useful. As mentioned previously, cutscenes may vary based on player preferences which may cause each cutscene to look different. In the same way that humans can identify the same cutscene in two different videos regardless of variations in the scene, the algorithms are robust to small changes in the cutscenes since the outputs for the same cutscene will be substantially the same, making them easy to identify. Other methods of fingerprinting are susceptible to these small changes, resulting in a big difference in the output, thereby making it difficult to identify cutscenes.

For ease of description the at least one image of the plurality of images may be referred to as a single image, however, it should be apparent this is not intended to limit the scope of the invention. The above-described algorithm may be applied to an image of the plurality of images in the first video signal to output a hash code for the image. This may be repeated for the plurality of images in each of the video signals. The fingerprints will therefore comprise a plurality of hash codes, each based on an image of the plurality of images.

Alternatively, methods of machine learning techniques such as deep learning may be used to produce the fingerprints. Techniques may include any appropriate artificial neural network.

At S116 the computer compares the first video fingerprint with the second video fingerprint. The plurality of signatures of each fingerprint are arranged consecutively, allowing for a comparison of the signatures to be make in the order by which the images they are each based on were received.

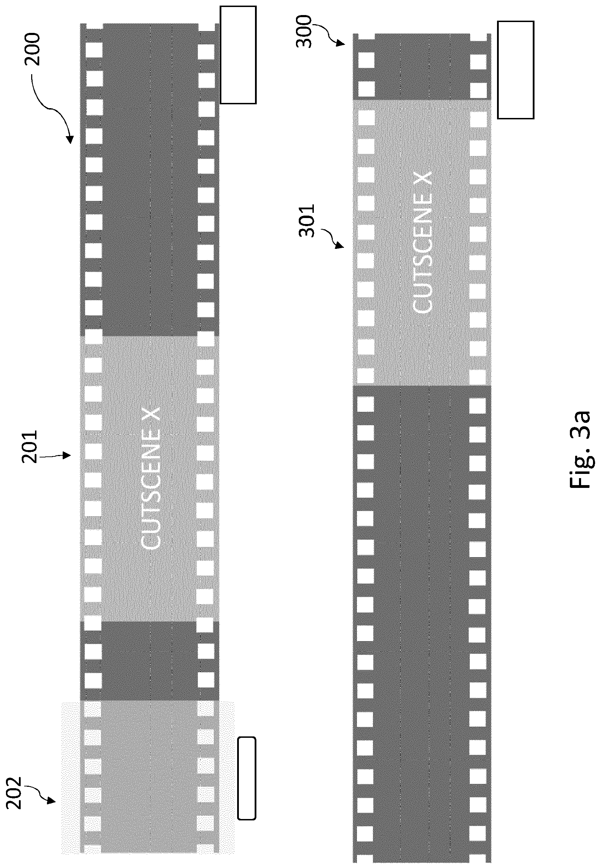

Comparing the first video fingerprint with the second video fingerprint comprises comparing at least a portion of the first video fingerprint with a plurality of portions of the second video fingerprint, the portions each comprising the same number of signatures. Figure 3a-3c provide an exemplary visualisation of this process.

Figure 3a-3c schematically show the video fingerprints 200, 300, both comprising the same cutscene 201, 301. In reality, these video fingerprints 200, 300 are not film reels as displayed in the figure, but are instead a plurality of signatures arranged consecutively. In Figure 2a, a portion of the first video fingerprint 200 is schematically illustrated using a first block 202. In practice, this is a selected number of signatures. The portion of the first video fingerprint 200, or first block 202, can for example comprise 300 consecutive signatures.

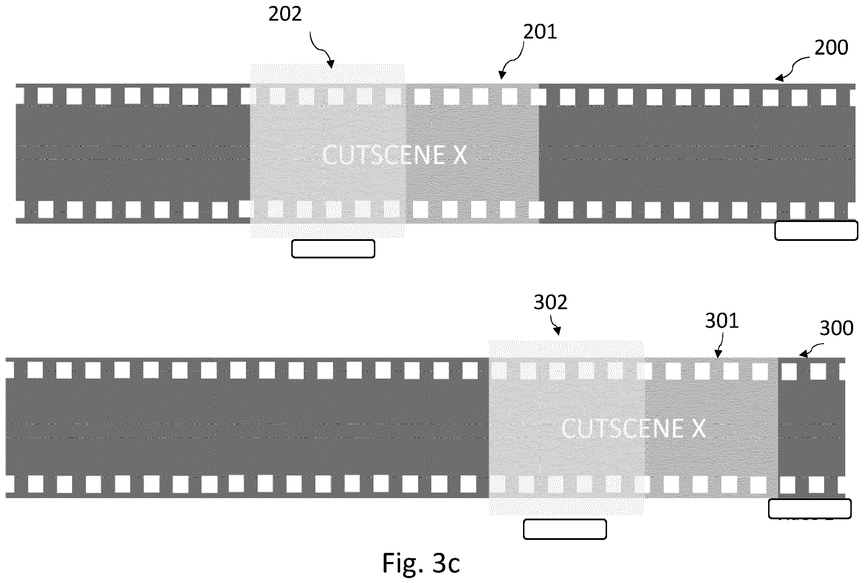

A second block 302 (shown in Figure 3c) schematically representing a portion of the second video fingerprint 300 can also comprise 300 consecutive signatures. The first block 202 may be compared with the second block 302. The second block 302 may then "slide" over the second video fingerprint 300 such to select a second portion of the second fingerprint 300 to compare with the first block 202 of the first fingerprint 200. The second portion of the second fingerprint 300 may be similar to the original portion of the second fingerprint 300 but instead the signatures in the second portion have been shifted along such that each signature has moved from a position n to position n-1. This sliding may occur a plurality of times as to select a plurality of portions from the second fingerprint 300 to compare with the first block 202 until the whole of the second video fingerprint 300 has been compared with the first block 202. Each time a comparison is made, an attempt may be made to identify the compared blocks 202, 302 as a matched portion (as described in detail below).

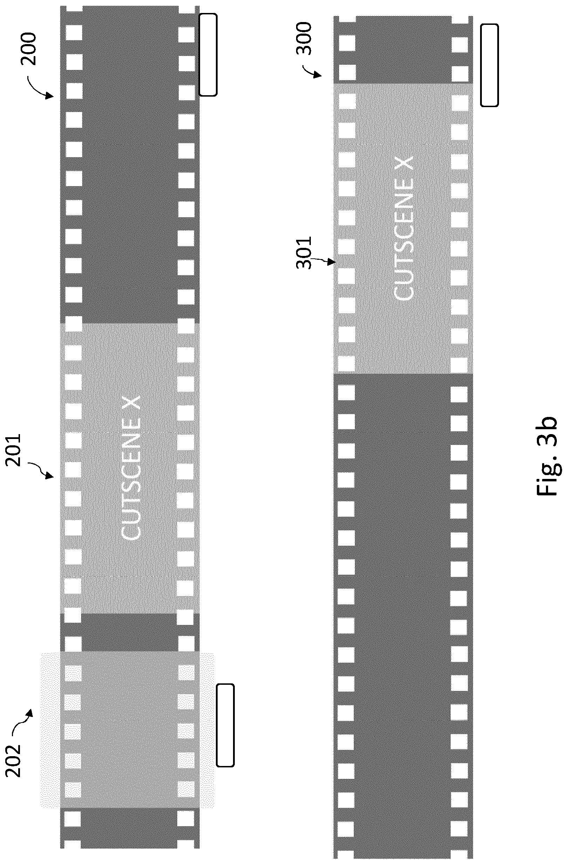

A second portion of the first video fingerprint may be selected by "sliding" the first block 202 along the first fingerprint 200, as demonstrated in Figure 3b. A plurality of portions may be selected. Each time the first block 202 selections another portion of the first fingerprint 200, it may be compared with each of the plurality of portions of the second block 302, selected when the second block 302 slides across the second fingerprint. This process can be repeated until the whole of the first video fingerprint 200 is compared with the whole of the second video fingerprint 300.

As in S118, a cutscene is identified by the computer when at least a portion of the first video fingerprint 200 has at least a threshold level of similarity with at least a portion of the second video fingerprint 300.

The computer 400 may determine at least one discrete result for each of the compared portions. In other words, when the first block 202 is compared with the second block 302, at least one discrete result may be returned. The discrete result may be a discrete value comprising one of a "true" or a "false" value. Preferably, a plurality of discrete values will be determined for each of the compared portions, for example, each discrete value indicates that a signature from the first block 202 is matched or unmatched with a signature from the second block 302. The number of "true" values and/or the number of "false" values returned may be used to calculate an error value between the first block 202 and the second block 302, indicating the level of similarity between the blocks 202, 302. This may be done by calculating a ratio or a percent of the discrete values. Similar blocks 202, 302 will have a high number of "true" values and a low number of "false" values, while dissimilar blocks 202, 302 will have a high number of "false" values and a low number of "true" values.

In some examples, compared portions with a calculated error value above a given threshold error value may be identified as matched portions. Alternatively, a threshold number of "true" or "false" values may define the error margin on the compared blocks 202, 302. Compared blocks 202, 302 of the video fingerprints 200, 300 with above a threshold number of "true" values can be identified as matched portions. In other examples, compared blocks 202, 302 of the video fingerprints 200, 300 below a threshold number of "false" values can be identified as matched portions.

The computer 400 may additionally or alternatively calculate a mean squared error value for the compared portions. In other words, each time the first block 202 is compared with the second block 302, a mean squared error value may be calculated.

In this example, the mean squared error value is a quantification of the error between the signatures defined by the first block 202 and the second block 302. The mean squared error for blocks 202, 302 both containing a substantial portion of the cutscene 201, 301 will be relatively low compared with the mean squared error for the blocks 202, 302 which do not both contain a substantial portion of the cutscene 201, 301. For example, the mean squared error calculated on the signatures in the first block 202 compared with the second block 302 in Figure 3a will be relatively high, while the mean squared error on the signatures in the first block 202 compared with the second block 302 in Figure 3c will be relatively low since both block in this figure comprise a substantial portion of the cutscene 201, 301.

A low mean squared error means the level of similarity is high while a high mean squared error means that the level of similarity is low. Each calculated mean squared error value may be compared with an error margin that is determined based on a plurality of the mean squared error values obtained, preferably based on all mean squared values obtained. The error margin on the mean squared error values is defined as the maximum deviation allowed for each calculated mean squared error value.

The error margin may be chosen manually by a user or a program may be used. The error margin can for example be set to a 10% error. This means that the compared blocks 202, 302 of the video fingerprints 200, 300 that have a mean squared error deviating by more than 10% from the mean of the mean squared error (i.e. are above or below this value by 10%), are identified as matched portions.

The identified matched portions of each video fingerprint may be merged into a single clip. This may involve removing overlapping sections of the matched portions such that a continuous clip is created. This clip will be the same as this section of the originally received video signal.

The above-described method is a way of shortening the original video signal to a clip comprising mainly the cutscene. However, this clip may contain parts of a different scene either side of the cutscene. The cutscene can therefore be pruned, or cropped, based on an identified start of the cutscene and an end of the cut scene. This may be done manually or may be done automatically.

## Claims

1. A method for identifying a cutscene in gameplay footage, the method comprising:
receiving a first video signal and a second video signal each comprising a plurality of images;
creating a first video fingerprint comprising a plurality of signatures, each signature of the plurality of signatures based on at least one image of the plurality of images in the first video signal;
creating a second video fingerprint comprising a plurality of signatures, each signature of the plurality of signatures based on at least one image of the plurality of images in the second video signal;
comparing the first video fingerprint with the second video fingerprint; and
identifying a cutscene when at least a portion of the first video fingerprint has at least a threshold level of similarity with at least a portion of the second video fingerprint.

2. The method according to claim 1, wherein each signature of the plurality of signatures comprises a plurality of characters, each character of the plurality of characters representing a similar feature within the at least one image of the plurality of images.

3. The method according to claim 1 or 2, wherein each signature of the plurality of signatures are the same size.

4. The method according to claim 1, wherein the steps of creating the video fingerprints comprise using locality-sensitive hashing to generate each signature of the plurality of signatures, each signature of the plurality of signatures being a hash code.

5. The method according to claim 4, wherein the locality-sensitive hashing is one of perceptual hashing or wavelet hashing.

6. The method according to any one of the preceding claims, wherein the plurality of signatures of each fingerprint are arranged consecutively.

7. The method according to any one of the preceding claims, wherein the step of comparing the first video fingerprint with the second video fingerprint comprises comparing at least a portion of the first video fingerprint with a plurality of portions of the second video fingerprint, the portions each comprising the same number of signatures.

8. The method according to any one of the preceding claims, wherein the step of comparing the first video fingerprint with the second video fingerprint comprises comparing a plurality of portions of the first video fingerprint with a plurality of portions of the second video fingerprint, the portions each comprising the same number of signatures.

9. The method according to claim 7 or 8, further comprises calculating a mean squared error value for each of the compared portions.

10. The method according to claim 9, further comprises comparing the mean squared error value for each of the compared portions with an error margin and identifying the compared portions as matched portions when the mean squared error value is one of greater than or less than the error margin.

11. The method according to claim 10, wherein the identified matched portions of the first video fingerprint or the second video fingerprint are merged into a single clip.

12. The method according to claim 11, further comprises identifying a start of the cutscene and an end of the cutscene within the single clip.

13. The method according to claim 12, wherein the single clip is pruned based on the identified start of the cutscene and the identified end of the cutscene.

14. A system configured to perform the method of any preceding claim, the system comprising:
a receiving unit configured to receive a first video signal and a second video signal each comprising a plurality of images;
a creation unit configured to create a first video fingerprint comprising a plurality of signatures, each signature of the plurality of signatures based on one image of the plurality of images in the first video signal, the creation unit further configured to create a second video fingerprint comprising a plurality of signatures, each signature of the plurality of signatures based on one image of the plurality of images in the second video signal;
a comparison unit configured to compare the first video fingerprint with the second video fingerprint; and
an identification unit configured to identify a cutscene when at least a portion of the first video fingerprint has at least a threshold level of similarity with at least a portion of the second video fingerprint
